# EUROPEAN PATENT APPLICATION

(11) **EP 4 737 668 A1**
(43) Date of publication of application: **06.05.2026**
(21) Application number: 25768543.8
(22) Date of filing: 27.02.2025
(51) Int. Cl.: E05C 9/02, E05C 9/18, H01M 50/211

(54) **DOOR LOCKING DEVICE OF ENERGY STORAGE APPARATUS**

(30) Priority: 07.03.2024 KR 20240032331
(71) Applicant: LG Energy Solution, Ltd., Seoul 07335 (KR)
(72) Inventor: OH, Sunghoon, Daejeon 34122 (KR)
(74) Representative: Plasseraud IP
(86) International application number: PCT/KR2025/002748
(87) International publication number: WO 2025/188019

(57) **Abstract**

A door lock device of an energy storage device for a door coupled to a main body of a case of the energy storage device may include a bracket disposed on the door, and a rod bar assembly movably disposed on the main body of the case, wherein the rod bar assembly may include a rod bar slidably disposed on the main body of the case, and a lock bracket disposed on the rod bar and configured to move together with the rod bar to restrain and release the bra cket disposed on the door.

## Description

### [TECHNICAL FIELD]

The present disclosure relates to a door lock device for a door configured to open and close an energy storage device.

### [BACKGROUND ART]

Unlike primary batteries that cannot be recharged, secondary batteries refer to batteries that may be charged and discharged, and are applied not only to portable devices but also to electric vehicles (EVs) and hybrid electric vehicles (HEVs) that are driven by an electric drive source.

Currently, the types of secondary batteries widely used include lithium ion batteries, lithium polymer batteries, nickel cadmium batteries, nickel hydrogen batteries, nickel zinc batteries, and the like. The operating voltage of these unit secondary battery cells, i.e., unit battery cells, is approximately 2.4 volts (V) to 4.6 V. Accordingly, when a higher output voltage is required, a battery pack is configured by connecting multiple battery cells in series. In addition, a battery pack is configured by connecting multiple battery cells in parallel depending on the charge and discharge capacity required for the battery pack. Accordingly, the number of battery cells included in the battery pack may be set in various ways depending on the required output voltage or charge/discharge capacity.

When configuring a battery pack by connecting multiple battery cells in series/parallel, generally, at least one battery cell, or a battery module composed of multiple battery cells may be configured first, and then at least one of these battery modules and an additional component may be used to configure the battery pack. Here, the battery module refers to a component in which multiple battery cells are connected in series or parallel, and the battery pack may refer to a component in which multiple battery modules are connected in series or parallel to increase capacity, output, and the like.

Recently, energy storage devices are being used to store generated power, and energy storage devices may be configured to include multiple battery modules.

On one side of such an energy storage device, a door configured to open and close the energy storage device may be provided, and a door lock device capable of stably locking and unlocking the door is required.

### [DESCRIPTION OF THE INVENTION]

### [TECHNICAL OBJECTIVES]

The present disclosure aims to provide a door lock device capable of stably locking and unlocking a door configured to open and close an energy storage device in the energy storage device.

### [TECHNICAL MEANS]

According to an embodiment of the present disclosure, a door lock device of an energy storage device for a door coupled to a main body of a case of the energy storage device may include a bracket disposed on the door, and a rod bar assembly movably disposed on the main body of the case, wherein the rod bar assembly may include a rod bar slidably disposed on the main body of the case, and a lock bracket disposed on the rod bar and configured to move together with the rod bar to restrain and release the bracket disposed on the door.

Furthermore, the bracket may include a lock plate, and an end portion of the lock bracket may be disposed on the lock plate in a locked state of the door.

Furthermore, the lock bracket may include a roller.

Furthermore, the bracket may further include an inclined plate inclined at one end of the lock plate.

Furthermore, when the door is switched from an unlocked state to the locked state, the roller of the lock bracket may move along the inclined plate to be disposed on the lock plate.

Furthermore, the inclined plate may be bent at the one end of the lock plate toward the main body of the case.

Furthermore, the lock plate may be disposed parallel to the door.

Furthermore, the door lock device of the energy storage device may further include a protrusion disposed on one surface of the main body of the case.

Furthermore, the rod bar assembly may further include a fixing member disposed on the rod bar and movable together with the rod bar, and a position of the fixing member may be fixed by the protrusion in an unlocked state of the door.

Furthermore, the fixing member may include a convex curved portion.

Furthermore, the fixing member may be formed in a strap shape, and the convex curved portion may be formed in a portion of the fixing member.

Furthermore, the convex curved portion may be convexly curved in a direction of the protrusion.

Furthermore, the convex curved portion of the fixing member may be seated on the protrusion in the unlocked state of the door.

Furthermore, the rod bar may include a hole extending along a movement direction thereof.

Furthermore, the protrusion may be inserted into the hole.

Furthermore, the rod bar assembly may further include a coupling block in contact with one surface of the main body of the case, and the rod bar may be spaced apart from the one surface of the main body of the case by the coupling block.

According to an embodiment of the present disclosure, a door lock device of an energy storage device for a door coupled to a main body of a case of the energy storage device may include a bracket disposed on the door, and a lock bracket movably disposed on the main body of the case, wherein the bracket of the door is restrained or released based on a moving direction of the lock bracket.

In addition, the lock bracket may include a roller.

Further, the door lock device may also include a protrusion disposed on one surface of the main body of the case, and a fixing member movable together with the lock bracket, wherein a position of the fixing member is fixed by the protrusion in an unlocked state of the door.

Also, the fixing member may include a convex curved portion.

### [EFFECT OF THE INVENTION]

According to an embodiment of the present disclosure, a door lock device configured to stably lock and unlock a door in an energy storage device is provided, and the door lock device according to an embodiment of the present disclosure maintains an unlocked state of the door after the door is unlocked, such that interference may be eliminated when opening and closing the door.

### [BRIEF DESCRIPTION OF THE DRAWINGS]

FIG. 1 is a perspective view illustrating an energy storage device according to an embodiment of the present disclosure,
FIG. 2 is an exploded perspective view illustrating the energy storage device illustrated in FIG. 1,
FIG. 3 is a perspective view illustrating a door in an energy storage device according to an embodiment of the present disclosure,
FIG. 4 is a perspective view illustrating a case with a door removed in an energy storage device according to an embodiment of the present disclosure,
FIG. 5 is a perspective view illustrating a rod bar assembly in a door lock device of an energy storage device according to an embodiment of the present disclosure,
FIG. 6 is a partial detailed view illustrating the rod bar assembly in FIG. 5,
FIG. 7 is a view illustrating a door locked state in a door lock device of an energy storage device according to an embodiment of the present disclosure,
FIG. 8 is a view illustrating a door unlocked state in a door lock device of an energy storage device according to an embodiment of the present disclosure,
FIG. 9 is a partial detailed view illustrating a rod bar assembly in a door unlocked state in a door lock device of an energy storage device according to an embodiment of the present disclosure,
FIG. 10 is a perspective view illustrating a battery module according to an embodiment of the present disclosure,
FIG. 11 is a view illustrating inside of a battery module according to an embodiment of the present disclosure,
FIG. 12 is a view illustrating an example of a battery cell according to an embodiment of the present disclosure,
FIG. 13 is a view illustrating a support frame supporting a battery module in an energy storage device according to an embodiment of the present disclosure,
FIG. 14 is a detailed view illustrating a vertical support in FIG. 13,
FIG. 15 is a detailed view illustrating a lower support in FIG. 13,
FIG. 16 is a detailed view illustrating an upper support in FIG. 13,
FIG. 17 is a front view illustrating a state in which a battery module is mounted on the upper support in FIG. 13,
FIG. 18 is a perspective view illustrating a support frame with a battery module mounted on it according to an embodiment of the present disclosure, and
FIG. 19 is a perspective view illustrating a support frame with a battery module mounted on it, viewed from another angle according to an embodiment of the present disclosure.

### [MODES FOR IMPLEMENTING THE INVENTION]

The advantages and features of the present disclosure and methods for achieving them will become clear by referring to the embodiments described in detail below along with the accompanying drawings. However, the present disclosure is not limited to the embodiments disclosed below and will be implemented in various different forms, the present embodiments only serve to ensure that the disclosure of the present disclosure is complete, it is provided to fully inform those who have common knowledge in the technical field to which the present disclosure pertains, and the present disclosure is to be only defined by the scope of the claims. Accordingly, in some embodiments, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a portion of a layer, film, region, plate and the like is said to be "on" another part, this includes not only being "directly on" another part, but also cases where there is another portion therebetween. Conversely, when a portion is said to be "directly on" another part, it means that there is no other portion therebetween. Additionally, when a portion of a layer, film, region, plate and the like is said to be "beneath" another part, this includes not only cases where it is "directly beneath" another part, but also cases where there is another portion therebetween. Conversely, when a portion is said to be "directly beneath" another part, it means that there is no other portion therebetween.

A door lock device of an energy storage device according to an embodiment of the present disclosure will be described in detail with reference to the drawings.

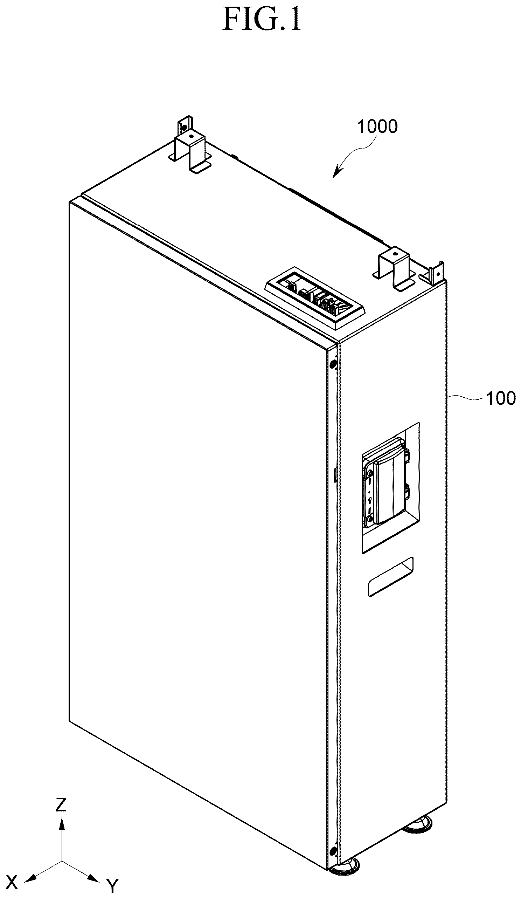

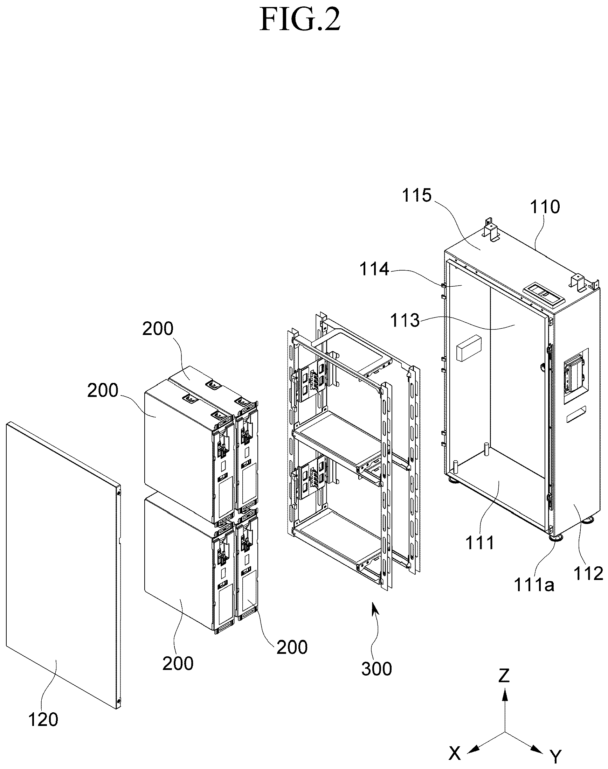

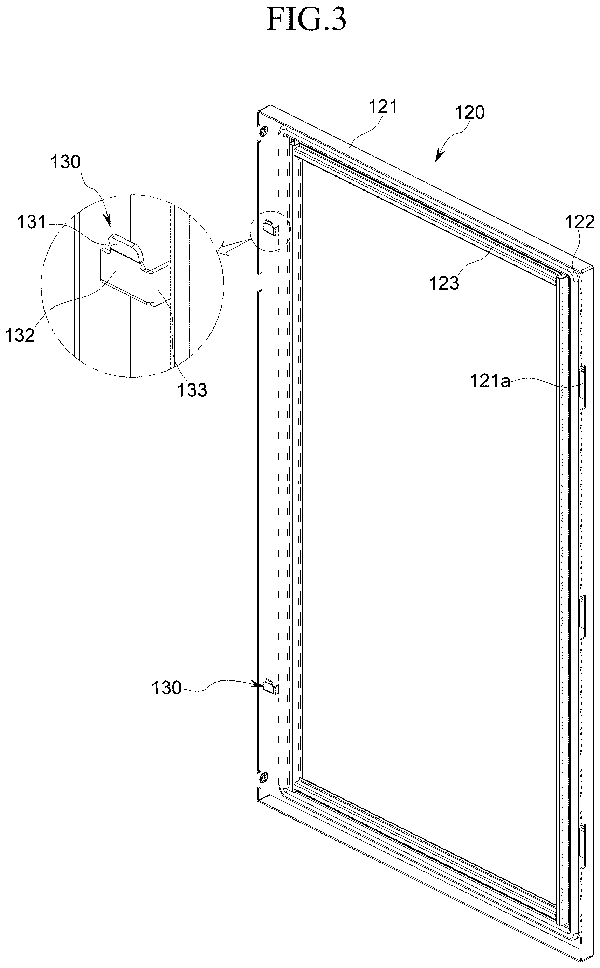

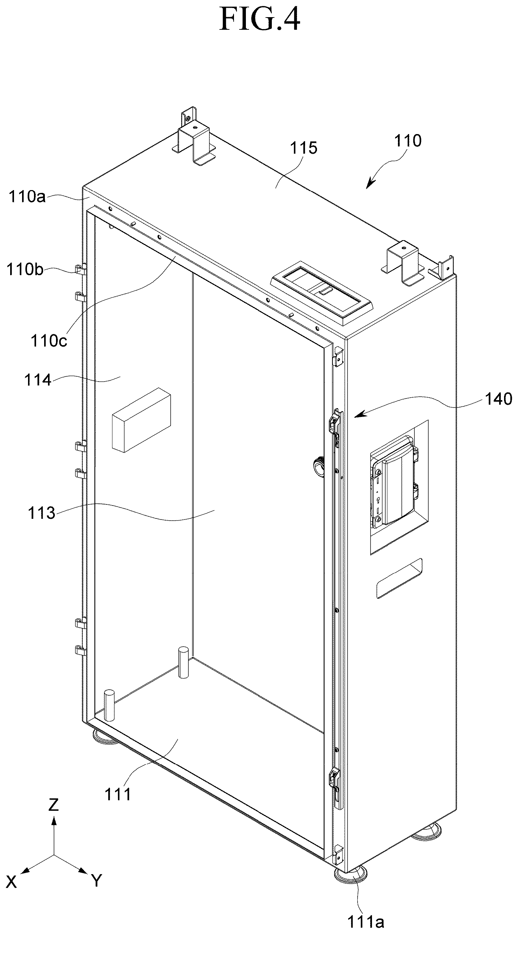

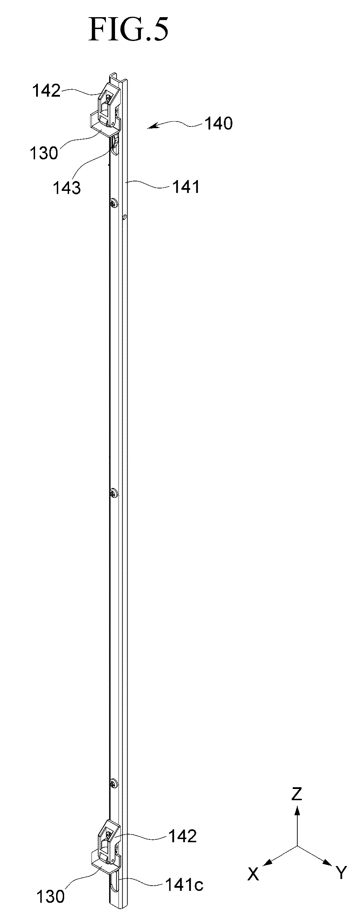

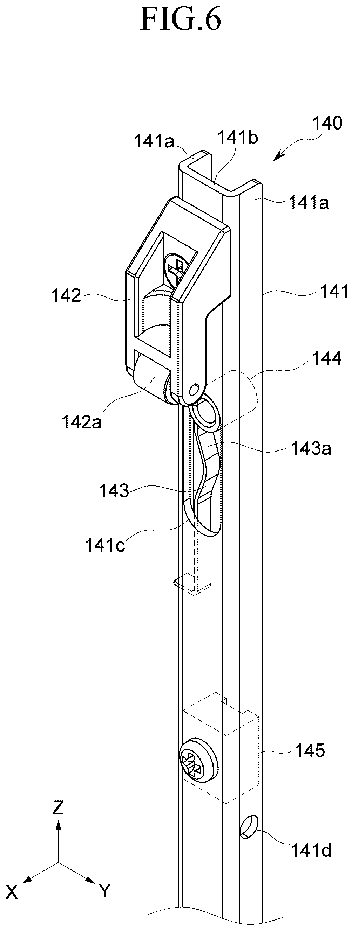

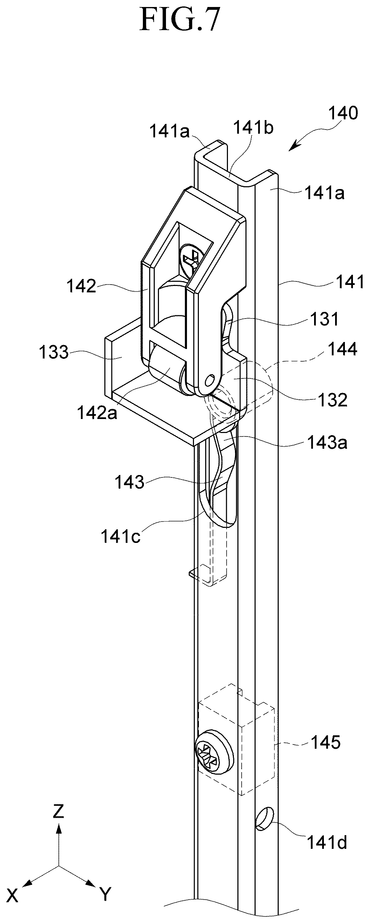

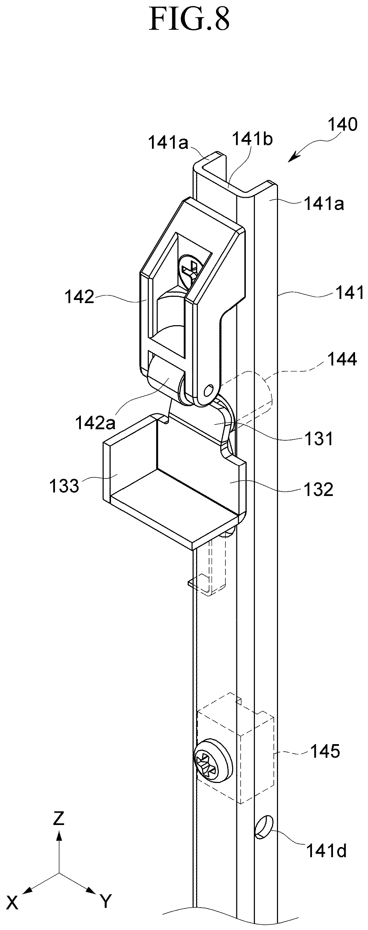

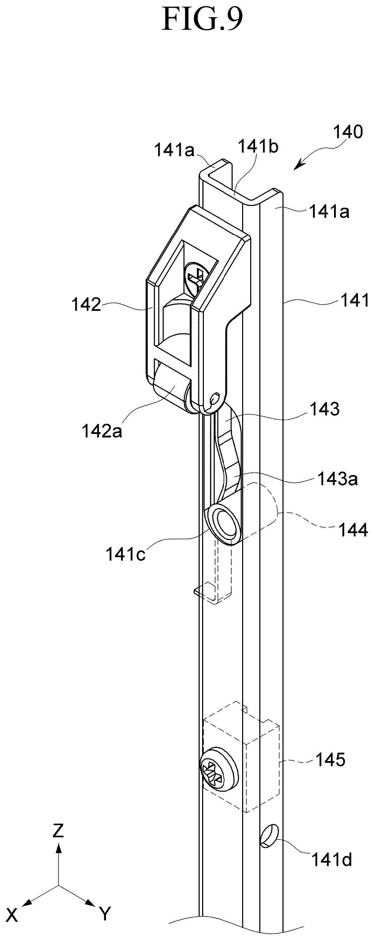

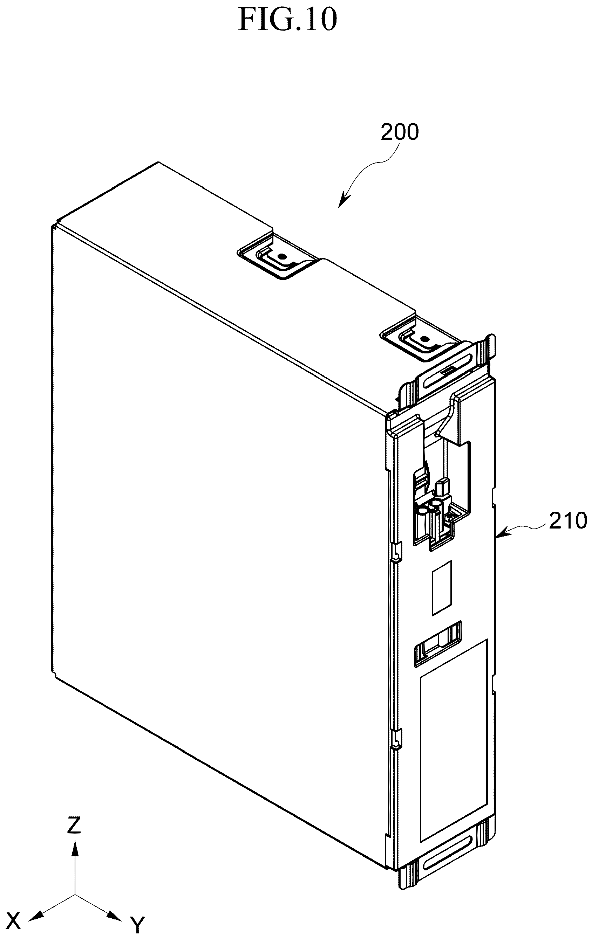

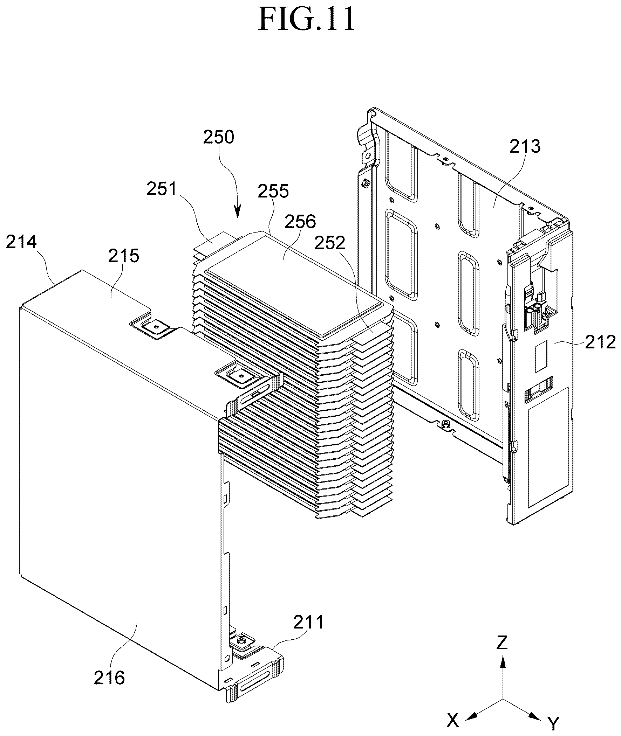

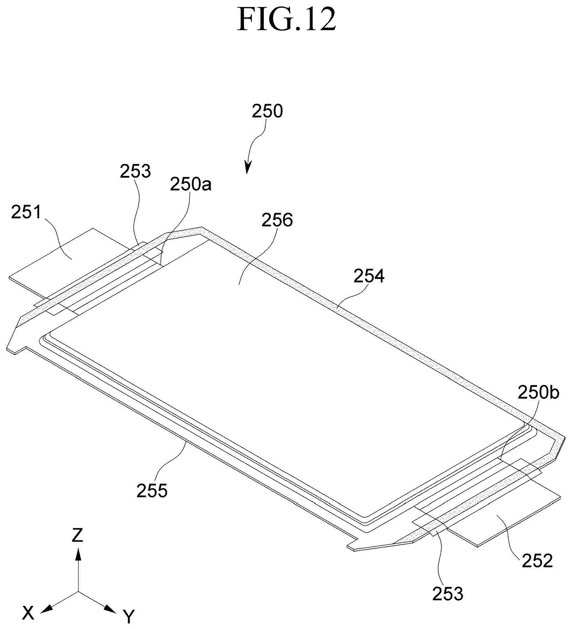

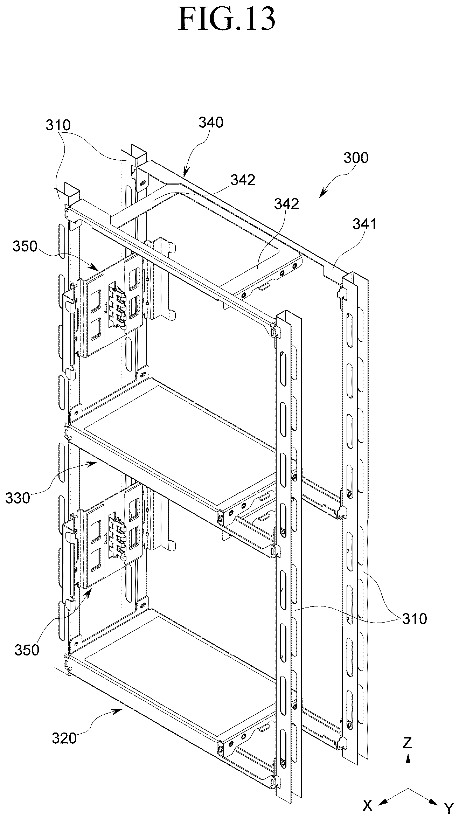

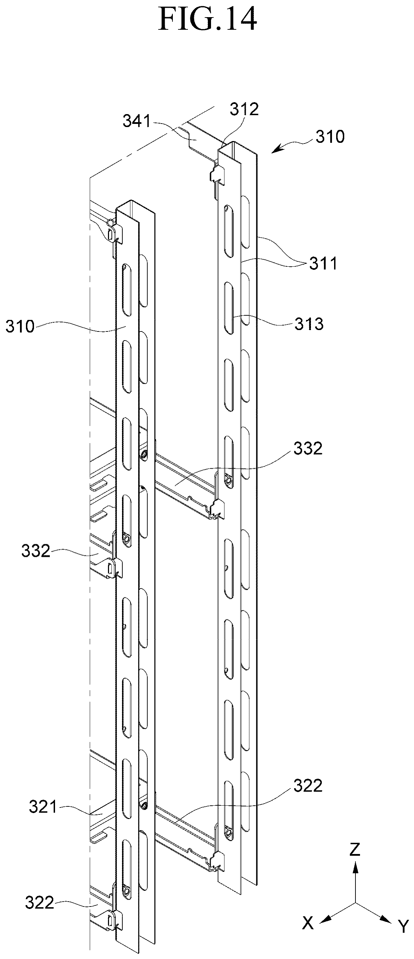

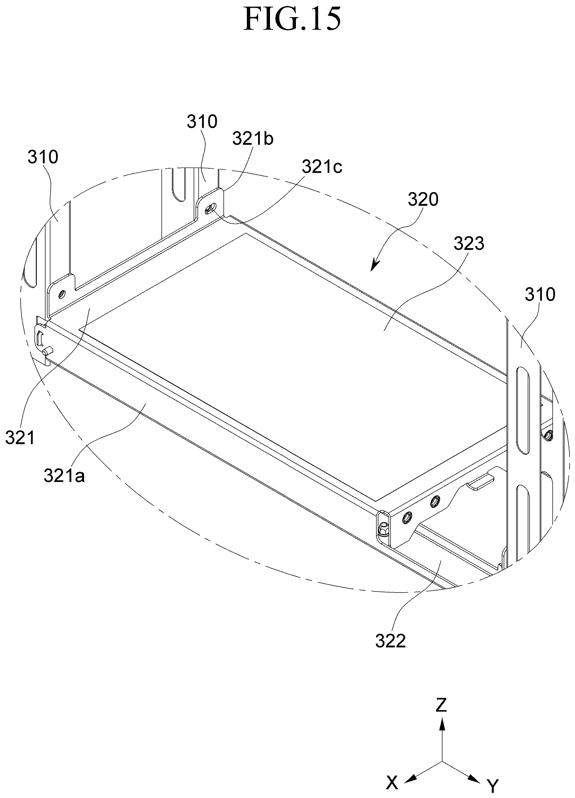

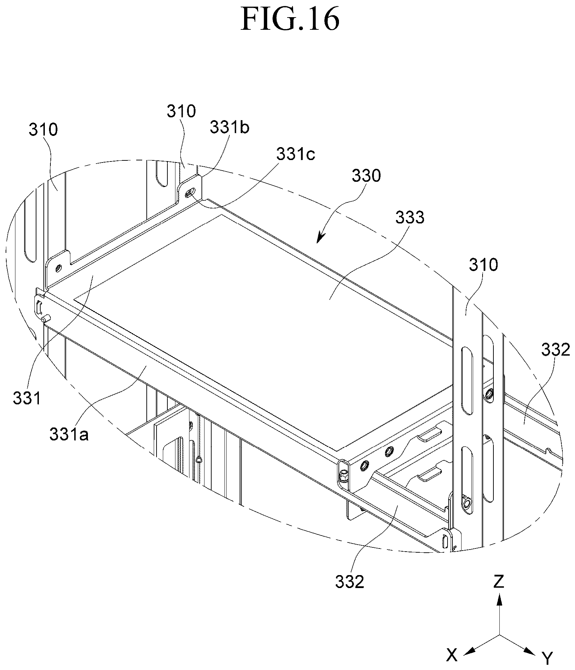

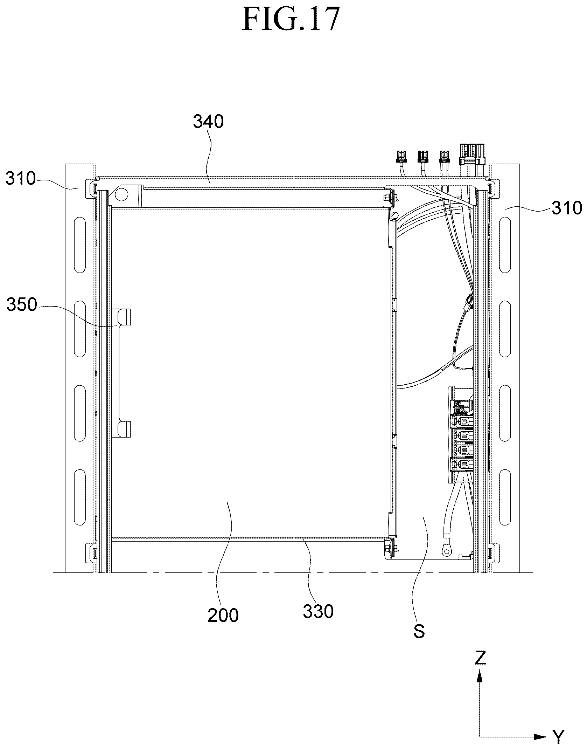

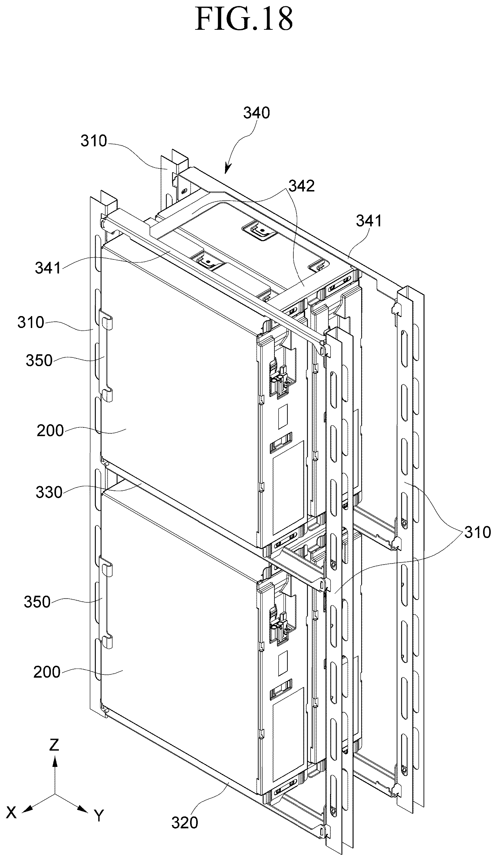

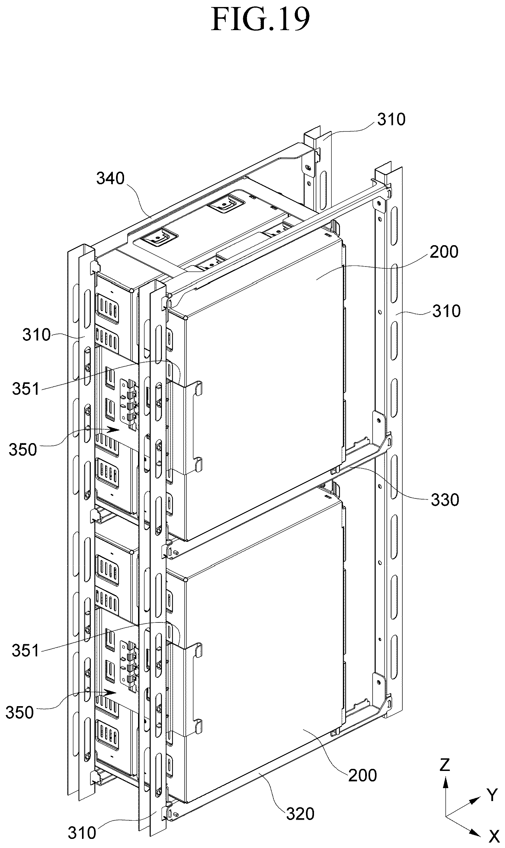

FIG. 1 is a perspective view illustrating an energy storage device according to an embodiment of the present disclosure, FIG. 2 is an exploded perspective view illustrating the energy storage device illustrated in FIG. 1, FIG. 3 is a perspective view illustrating a door in an energy storage device according to an embodiment of the present disclosure, FIG. 4 is a perspective view illustrating a case with a door removed in an energy storage device according to an embodiment of the present disclosure, FIG. 5 is a perspective view illustrating a rod bar assembly in a door lock device of an energy storage device according to an embodiment of the present disclosure, FIG. 6 is a partial detailed view illustrating the rod bar assembly in FIG. 5, FIG. 7 is a view illustrating a door locked state in a door lock device of an energy storage device according to an embodiment of the present disclosure, FIG. 8 is a view illustrating a door unlocked state in a door lock device of an energy storage device according to an embodiment of the present disclosure, FIG. 9 is a partial detailed view illustrating a rod bar assembly in a door unlocked state in a door lock device of an energy storage device according to an embodiment of the present disclosure, FIG. 10 is a perspective view illustrating a battery module according to an embodiment of the present disclosure, FIG. 11 is a view illustrating inside of a battery module according to an embodiment of the present disclosure, FIG. 12 is a view illustrating an example of a battery cell according to an embodiment of the present disclosure, FIG. 13 is a view illustrating a support frame supporting a battery module in an energy storage device according to an embodiment of the present disclosure, FIG. 14 is a detailed view illustrating a vertical support in FIG. 13, FIG. 15 is a detailed view illustrating a lower support in FIG. 13, FIG. 16 is a detailed view illustrating an upper support in FIG. 13, FIG. 17 is a front view illustrating a state in which a battery module is mounted on the upper support in FIG. 13, FIG. 18 is a perspective view illustrating a support frame with a battery module mounted on it according to an embodiment of the present disclosure, and FIG. 19 is a perspective view illustrating a support frame with a battery module mounted on it, viewed from another angle according to an embodiment of the present disclosure.

An energy storage device 1000 according to an embodiment of the present disclosure may include a case 100, a plurality of battery modules 200, and a support frame 300 configured to support the battery modules 200.

The case 100 may form an outer case of the energy storage device 1000, accommodate the plurality of battery modules 200 and the support frame 300, and include a main body 110 and a door 120.

In the case 100, the main body 110 may include a bottom portion 111, a front portion 112, a rear portion 114, a side portion 113, and a top portion 115.

The bottom portion 111 of the main body 110 may form the bottom of the main body 110 in the form of a plate extending in a horizontal direction. On an outer lower surface of the bottom portion 111, four support legs 111a for supporting the case 100 may be respectively disposed at corner portions of the bottom portion 111.

In the main body 110, the front portion 112 and the rear portion 114 may form a front surface and a rear surface of the case 100, respectively, and may be disposed on front and rear edges of the bottom portion 111 and the top portion 115, respectively.

In the main body 110, the side portion 113 may form one side surface of the case 100, and may be disposed on left or right edges of the bottom portion 111 and the top portion 115, respectively.

The front portion 112, the rear portion 114, and the side portion 113 may form a side surface of the case 100 together with the door 120.

In the main body 110, the top portion 115 may be disposed on an upper portion of the case 100 to cover inside of the case 100. An electrical device such as a power conversion system (PCS) may be installed on an outer upper surface of the upper surface 115, and a structure for installing the electrical device may be provided.

The door 120 may be coupled to one side surface of the main body 110 to open and close the inside of the case 100. The door 120 may be disposed on an opposite side of the side portion 113 of the case 100 to face the side portion 113 and form one side surface of the case 100.

The door 120 may be rotatably coupled to the main body 110 by a hinge, and may also be coupled to the main body 110 so as to be completely detachable from the main body 110.

According to an embodiment of the present disclosure, a lock device for the door 120 may be provided.

A lock device of the door according to an embodiment of the present disclosure may include a bracket 130 disposed on the door 120 and a rod bar assembly 140 of the main body 110 of the case.

As described above, the door 120 may be coupled to one side surface of the main body 110 so as to face the side portion 113 on a side opposite to the side portion 113, and an area of the door 120 may be the same as or similar to that of the side portion 113.

As illustrated in FIG. 3, the door 120 may include a door panel 121, a gasket 122, a stiffness bar 123, and a bracket 130.

The door panel 121 may be disposed so as to face the side portion 113, and an area of the door panel 121 may be the same as or similar to that of the side portion 113. Accordingly, one side surface of the case 100 may be opened or closed by the door 120. In the present embodiment, the door panel 121 may have an approximately quadrangular shape.

The gasket 122 may be disposed on an inner surface of the door panel 121 (a surface facing the main body 110 of the case 100) to be spaced inwardly apart from an edge of the door panel 121, and may be formed in an approximately quadrangular shape in the present embodiment. The gasket 122 may be disposed on a quadrangular frame 110c that protrudes from one surface 110a of the main body 110 when the door 120 is locked, thereby sealing the case 100.

The stiffness bar 123 may be disposed on the inner surface of the door panel 121 where the gasket 122 is disposed, and may reinforce rigidity of the door panel 121. In the present embodiment, the stiffness bar 123 may be disposed in a quadrangular shape on the inside of the gasket 122 and may include four linear bars. The four linear bars constituting the stiffness bar 123 may be respectively disposed on each side of the quadrilateral. The stiffness bar 123 may be made of a metal material. In the door locked state, the stiffness bar 123 may be disposed on the inside of the quadrangular frame 110c protruding from the one surface 110a of the main body 110.

The bracket 130 may be disposed on one edge of the inner surface of the door panel 121 on which the gasket 122 is disposed.

The bracket 130 may include a connection portion 133 connected to the door panel 121, a lock plate 132, and an inclined plate 131.

The lock plate 132 of the bracket 130 may be bent at one end of the connection portion 133, and an end portion (a roller 142a) of the lock bracket 142 of the rod bar assembly 140 may be disposed on the lock plate 132 in the locked state of the door 120, such that the locked state may be maintained. In the present embodiment, the lock plate 132 may be formed in a planar shape and may be disposed parallel to the door panel 121.

The inclined plate 131 may be bent and extend at a predetermined angle from one end of the lock plate 132 toward the inside of the case 100 or toward the main body 110. A bending angle of the inclined plate 131 may be 90 degrees or less, or may be, for example, in a range of 10 to 60 degrees or 20 to 50 degrees.

As described below, when the door 120 is locked, the rod bar assembly 140 may move downward, and the roller 142a positioned at the end portion of the lock bracket 142 may move along the inclined plate 131 and may be disposed on the lock plate 132.

The brackets 130 may be disposed on upper and lower sides outside one side of the gasket 122 as illustrated in FIG. 3, and may form the lock device of the door together with the rod bar assembly 140.

A hinge portion 121a may be disposed on another side edge opposite to the one side edge where the bracket 130 is disposed in the door panel 121.

The hinge portion 121a may be configured such that the door 120 may be rotatably connected to the main body 110, a through hole that vertically passes through the hinge portion 121a may be formed at a center portion of the hinge portion 121a, and a hinge pin may be inserted into the through hole such that the door 120 may be rotatably coupled to the main body 110. Together with the hinge portion 121a, a hinge ring portion 110b may be disposed on one side edge of the main body 110 of the case, as a component into which the hinge pin is inserted, and the door may be rotatable as the hinge pin is inserted into the hinge portion 121a and the hinge ring portion 110b. A plurality of hinge portions 121a may be disposed on one side edge of the door panel 121, and three hinge portions 121a are illustrated in FIG. 3.

The rod bar assembly 140 may be disposed on one side edge of one surface 110a of the main body 110 to which the door 120 is coupled, and may be disposed outside the quadrangular frame 110c protruding from the one surface 110a of the main body 110.

The rod bar assembly 140 may include a rod bar 141, a lock bracket 142, and a fixing member 143.

The rod bar 141 may be disposed on one side edge of one surface 110a of the main body 110 to which the door 120 is coupled, and may be disposed to be slidably movable on an edge of the one surface 110a where the bracket 130 is disposed when the door 120 is closed. The rod bar 141 may extend vertically (Z-axis direction) along an edge of the one surface 140a as illustrated in FIG. 6, and may include a pair of wing plates 141a that face each other and are disposed vertically and a connection plate 141b.

The pair of wing plates 141a may be disposed so as to be spaced apart from each other and face each other on one side edge of the one surface 110a of the main body 110 and may be disposed vertically.

The connection plate 141b may connect the pair of wing plates 141a, and the pair of wing plates 141a may be bent from opposite side ends of the connection plate 141b toward the one surface 110a of the main body 110 to be formed integrally with the connection plate 141b.

The connection plate 141b may be spaced apart from the one surface 110a of the main body 110 and may be disposed parallel to the one surface 110a of the main body 110 or the door 120.

The rod bar 141 may be disposed so as to be movable vertically on the one surface 110a of the main body 110. As illustrated in FIG. 6, an insertion hole 141d may be formed in one wing plate 141a on one side surface of the rod bar 141, and a tool may be inserted into the insertion hole 141d and the rod bar 141 may move vertically using the tool.

A hole 141c extending in the vertical direction (Z-axis direction) may be formed in the connection plate 141b of the rod bar 141, and a protrusion 144 disposed on the one surface 140a of the main body 140 may be inserted into the hole 141c. In the present embodiment, as illustrated, an upper end of the protrusion 144 may be inserted into the hole 141d. Accordingly, the protrusion 144 may be inserted into the hole 141c to guide vertical movement of the rod bar 141. In addition, the rod bar 141 may move downward until the protrusion 144 contacts an upper end of the hole 141c, and may move upward until the protrusion 144 contacts a lower end of the hole 141c.

The holes 141c and the protrusions 144 may be provided in plural, and as illustrated in FIG. 5, the holes 141c may be formed at upper and lower portions of the rod bar 141, respectively, and the protrusions 144 inserted into the holes 141c may be disposed at upper and lower portions of the one surface 110a of the main body 110.

The lock bracket 142 may be disposed on the rod bar 141 and may move together with the rod bar 141 to restrain and release the bracket 130 of the door 120 The lock bracket 142 may be disposed on the connection plate 141b of the rod bar 141, one end of the lock bracket 142 may be coupled to the connection plate 141b of the rod bar 141, and another end of the lock bracket 142 may be spaced apart from the connection plate 141b toward the door 120 and extend downward.

The roller 142a that is rotatably coupled may be disposed on another end of the lock bracket 142. A rotation axis of the roller 142a may be disposed in a horizontal direction (Y-axis direction).

Accordingly, when the rod bar assembly 140 or the rod bar 141 moves downward, the roller 142a may move over the inclined plate 131 of the bracket 130 and then be disposed on the lock plate 132. In such a case, the roller 142a may press the lock plate 132 of the bracket 130 toward the main body, and the gasket 122 of the door 120 may be firmly coupled by being in close contact with the frame 110c of the main body 110. Accordingly, sealing of the door 120 may be improved in the locked state, and the locked state may be firmly maintained. In addition, since the roller 142a moves while rotating on the inclined plate 131 and the lock plate 132, friction with the bracket 130 may be reduced, such that the door 120 may be switched from the unlocked state (or the locked state) to the locked state (or the unlocked state) with less force.

The lock brackets 142 may be respectively disposed on upper and lower portions of the connection plate 141b of the rod bar 141, and each lock bracket 142 may restrain the bracket 130 of the door 120 to maintain the locked state of the door 120.

In the rod bar assembly 140, the fixing member 143 may allow the rod bar assembly 140 to maintain its position in the unlocked state. In the present embodiment, the fixing member 143 may be disposed on the rod bar 141 and may move along with the vertical movement of the rod bar 141.

In the present embodiment, the fixing member 143 may be formed in the shape of a strap extending vertically, and may have a curved portion 143a that is convexly curved in a direction of the protrusion 144 may be formed in some areas, as illustrated. The fixing members 143 and the protrusions 144 may be disposed on the upper and lower sides of the rod bar 141, respectively.

FIG. 7 is a view illustrating a locked state of the door lock device. In the locked state of the door 120, the roller 142a of the lock bracket 142 may be disposed in contact with the lock plate 132, and the roller 142a may press the lock plate 132. In the locked state, when the tool is inserted into the insertion hole 141d of the rod bar 141 and a user moves the rod bar 141 upward, the roller 142a may move while rotating from the lock plate 132 to the inclined plate 131, and the roller 142a may move downward over the inclined plate 131. When the roller 142a is completely separated from the inclined plate 131, the door 120 is in the unlocked state. FIG. 8 is a view illustrating an unlocked state of the door lock device. As in FIG. 8, the door 120 may be opened in the door unlocked state.

Regarding movement of the fixing member 143 when the rod bar 141 moves, when the fixing member 143 is in the locked state, the curved portion 143a of the fixing member 143 may be disposed below the protrusion 144, as illustrated in FIG. 7. In this state, when the rod bar 141 moves upward, the fixing member 143 has its own elasticity and deforms, such that the curved portion 143a may move over the protrusion 144 to be disposed above the protrusion 144.

FIG. 9 is a view illustrating the door unlocked state. When the curved portion 143a passes over the protrusion 144 and be disposed above the protrusion 144, the door may be in the unlocked state, and when an external force is removed in a state where the curved portion 143a is disposed above the protrusion 144, the curved portion 143a may be seated on the protrusion 144 such that the position of the rod bar 141 may be fixed.

In such a way, in the present embodiment, the position of the rod bar 141 may be fixed in the door unlocked state, and the door 120 and the rod bar 141 may not interfere with each other and the door 120 may be maintained in the unlocked state.

In order to switch from this unlocked state to the locked state again, the user may insert the tool into the insertion hole 141d of the rod bar 141 in a state where the door 120 is closed and may move the rod bar 141 downward. When the rod bar 141 moves downward, the curved portion 143a may pass over the protrusion 144 to be disposed below the protrusion 144.

Then, the roller 142a of the lock bracket 142 may move over the inclined plate 131 of the bracket 130 and may be disposed on the lock plate 132 to be in a locked state.

Meanwhile, as illustrated in FIG. 6, a coupling block 145 may be coupled to the rod bar 141. The coupling block 145 may protrude further toward the main body 110 than the wing plate 141a protrudes, and thus the wing plate 141a may be spaced apart from the one surface 110a of the main body 110. By separating the wing plate 141a from the one surface 110a of the main body 110, mutual friction may be reduced when the rod bar 141 moves vertically, the rod bar 141 may move with less force, durability may be improved, and scratches may be prevented.

Areas of the side portion 113 and the door 120 in the case 100 may be the same or similar to each other, and the areas of the side portion 113 and the door 120 may be larger than an area of the bottom portion 111. For example, the areas of the side portion 113 and the door 120 may be twice or more that of the bottom portion 111, and accordingly, as illustrated, a surface of the case 100 of the energy storage device 1000 having a large area may be disposed to be erected forming the side surface, thereby reducing the installation area.

As illustrated in FIGS. 10 and 11, the battery module 200 may include a module case 210 and a plurality of cell module assemblies (CMA) accommodated in the module case 210.

The cell module assembly (CMA) accommodated in the module case 210 may include a plurality of battery cells, and in each cell module assembly, the plurality of battery cells may be disposed in close contact.

Each battery cell may be, for example, a pouch-type battery cell 250. The pouch-type battery cell 250 may have a structure in which an electrode assembly is accommodated in a pouch-type case.

For example, the cell module assembly may include a plurality of battery cells that are mutually stacked or closely packed, and each battery cell may be provided with electrode leads 251, 252 at front and/or rear ends, and an anode lead may be provided at the front end, and a cathode lead may be provided at the rear end. In the cell module assembly, the plurality of battery cells 250 may be disposed to be electrically connected to each other.

In the cell module assembly of the present embodiment, the battery cells may be stacked vertically, and the plurality of cell module assemblies may be disposed vertically in the module case 210.

FIG. 12 is a view illustrating a pouch-type battery cell 250.

The battery cell 250 provided in a pouch type may include an electrode assembly and a cell case 255 that accommodates the electrode assembly.

The cell case 255 of the battery cell 250 may be a pouch-type cell case 255 for accommodating the electrode assembly. The cell case 255 may include a lower case and an upper case that covers the lower case, and the upper and lower cases may be integrally formed as a single body. As illustrated in FIG. 12, connection portions of the upper and lower cases may be formed in a structure in which they are bent and folded. In addition, as illustrated, the upper case may completely cover the lower case and a sealing portion 254 may be formed in a peripheral area.

Both the upper and lower cases may be formed in a laminate structure including an inner cover layer, a metal layer, and an outer cover layer. The inner cover layer may be located on an inner side of the cell case 255 based on the metal layer, and since the inner cover layer comes into direct contact with the electrode assembly, it should have insulation and electrolytic resistance, and to ensure sealing from the outside, sealing property is required, that is, a sealing portion where inner layers are thermally bonded should have excellent thermal bonding strength. The metal layer may be located between the inner cover layer and the outer cover layer to serve as a barrier layer that prevents moisture or various gases from penetrating into the battery from the outside, and a lightweight aluminum (Al) thin film with excellent formability may be used as a material for the metal layer in contact with the inner cover layer. The outer cover layer may be located on an outer side of the cell case 255 based on the metal layer, and a heat-resistant polymer with excellent tensile strength, moisture permeability, and air permeability may be used as the outer cover layer to protect the electrode assembly while ensuring heat resistance and chemical resistance, and for example, nylon or polyethylene terephthalate may be used.

An accommodating recess 256 may be formed in each of the upper and lower cases, and the electrode assembly may be accommodated in the accommodating recess 256 of the upper and lower cases. In the cell case 255 of the pouch-type battery cell 250, a portion illustrated in FIG. 12 is the upper case, and the lower case is disposed below it. In the present embodiment, the lower case of the cell case 255 may be disposed to face the bottom portion 321 of the module case 210, and the lower case and its accommodating recess 256 may be disposed parallel to the bottom portion 211.

The electrode assembly accommodated in the cell case 255 may be one of the group consisting of a jelly-roll type electrode assembly having a structure in which a separator is interposed between long sheet-shaped anodes and cathodes and then rolled up, a stack-type electrode assembly including unit cells having a structure in which rectangular anodes and cathodes are laminated with a separator interposed between them, a stack-folding-type electrode assembly in which unit cells are rolled up by a long separator film, and a lamination-stack-type electrode assembly in which unit cells are laminated with a separator interposed between them and attached to each other.

In addition, the electrode assembly may include two electrode tabs 250a, 250b and two electrode leads 251, 252 connected to the two electrode tabs 250a, 250b by a welding portion, respectively.

One of the two electrode tabs 250a, 250b may be an anode tab, and the other may be a cathode tab.

One of the two electrode leads 251, 252 may be an anode lead connected to the anode tab, and the other of the two electrode leads 251, 252 may be a cathode lead connected to the cathode tab. For example, the anode leads 251, 252 may be made of aluminum (Al), and the cathode leads 251, 252 may be made of copper (Cu).

A lead film 253 may be attached to each of the electrode leads 251, 252. The lead film 253 coupled to the electrode leads 251, 252 may be disposed between the electrode leads 251, 252 and the cell case 255 to prevent a short circuit from occurring between the electrode leads 251, 252 and the cell case 255 and improve the sealing force, thereby preventing leakage of the electrolyte, and the like.

Although the two electrode leads 251, 252 are illustrated as being disposed on each opposite side of the electrode assembly, the two electrode leads 251, 252 may be disposed on only one side of the electrode assembly depending on arrangement of the electrode tabs.

In the cell module assembly, the battery cell is not limited to the pouch-type battery cell, and may include other types of battery cells, such as poly prism or cylindrical battery cells.

The cell module assembly may be disposed in the module case 210 of the battery module 200 in an open form without an independent housing. In addition, as another example, the cell module assembly may be in the form of a plurality of battery cells housed in a housing, and the cell module assembly may be housed in individual housings and independently disposed in the module case 210.

As another example, the battery module 200 may be disposed in the module case 210 by stacking a plurality of battery cells.

The module case 210 may include a bottom portion 211, a front portion 212, a rear portion 214, opposite side portions 213, 216, and a top portion 215.

The bottom portion 211 of the module case 210 may form a bottom of the module case 210 in the form of a plate extending in a horizontal direction.

The front portion 212 and the rear portion 214 may form front and rear surfaces of the module case 210, respectively, and may be disposed at front and rear edges of the bottom portion 211 and the top portion 215, respectively.

The two side portions 213, 216 may form the two side surfaces of the module case 210 and may be respectively disposed on left and right edges of the bottom portion 211 and the upper portion 215.

The front portion 212, the rear portion 214, and the two side portions 213, 216 may form a side surface of the module case 210.

The upper portion 215 may be disposed on an upper portion of the module case 210 and cover inside of the module case 210.

Areas of the side portions 213, 216 in the module case 210 may be larger than an area of the bottom portion 211. For example, the area of the side portions 213, 216 may be twice or more that of the bottom portion 211, and accordingly, as illustrated, a surface of the module case 210 having a large area may be disposed to be erected forming the side surface of the module case 210, instead of the bottom, thereby reducing the installation area in the energy storage device 1000.

These multiple battery modules 200 may be disposed in the support frame 300 in the case 100.

FIG. 13 is a view illustrating the support frame 300 that supports the battery module 200 in the energy storage device 1000 according to an embodiment of the present disclosure.

The support frame 300 may support multiple battery modules 200. In the present embodiment, the support frame 300 may include a plurality of vertical supports 310, a lower support 320, an upper support 330, a top fixing member 340, and a module fixing member 350.

In the present embodiment, four vertical supports 310 may be provided with two vertical supports 310 disposed in front of the battery module 200 and two vertical supports 310 disposed in the rear of the battery module 200.

The vertical support 310 may include a pair of wing plates 311 and a connection plate 312.

The connection plate 312 disposed between the pair of wing plates 311 may connect the pair of wing plates 311. The pair of wing plates 311 and the connection plate 312 may be formed integrally, and the pair of wing plates 311 in the vertical support 310 may be bent outwardly (in an opposite direction from the battery module 200) at a certain angle (e.g., a right angle) at opposite ends of the connection plate 312 and may be disposed parallel to each other.

A plurality of through holes 313 may be provided spaced apart from each other along a longitudinal direction in each wing plate 311.

Since the vertical support 310 includes the pair of wing plates 311 bent on opposite sides of the connection plate 312 in this way, structural rigidity may be reinforced.

The lower support 320 may be disposed on a lower portion of the support frame 300 to support the plurality of battery modules 200.

In the present embodiment, it is illustrated that two battery modules 200 are supported by the lower support 320, but two or more battery modules 200 may be disposed on the lower support 320.

The lower support 320 may include a support plate 321 and two horizontal portions 322 (see FIG. 15).

The support plate 321 may be formed as a plate having an approximately quadrangular shape, and the battery module 200 may be supported on the support plate 321. The support plate 321 may be integrally formed with a bent plate 321b that is bent upward from an edge in a width direction (X-axis direction) of the support plate 321, and may be fixed by being coupled to two vertical supports 310 disposed at the rear of the battery module 200 using a bolt or the like through a coupling hole 321c formed in the bent plate 321b. The support plate 321 may be coupled to the vertical support 310 by means of bolts, rivets, welding, and the like. A material of the support plate 321 may be, for example, metal.

A sheet 323 may be disposed on the support plate 321.

The sheet 323 may be coupled or attached with an adhesive to the support plate 321, and may be, for example, a resin sheet, a polycarbonate sheet, and the like. As the sheet 323, a polycarbonate sheet has excellent electrical insulation, durability, weather resistance, impact resistance, and the like, and may stably support the heavy battery module 200.

In the present embodiment, as the sheet 323 is disposed on the support plate 321, friction may be reduced when the heavy battery module 200 is disposed on the support plate 321, such that installation of the battery module 200 may be facilitated and scratches between contact portions may be prevented.

An area of the sheet 323 may be equal to or smaller than an area of the support plate 321, and may be larger than a sum of the areas of the bottom portions 211 of the two battery modules 200.

The two side portions 321a bent downward at opposite ends of the support plate 321 along the longitudinal direction (Y-axis direction) may be provided. A length of the side portion 321a along the longitudinal direction (Y-axis direction) may be equal to that of the support plate 321.

The two horizontal portions 322 may be bent (e.g., at a right angle) toward the support plate 321 from end portions of the side portions 321a. The horizontal portions 322 may be parallel to the support plate 321.

The horizontal portion 322 may be formed integrally with the support plate 321, and one end of each horizontal portion 322 may be coupled to a lower portion of the vertical support 310 disposed in front of the battery module 200. The horizontal portion 322 may be coupled to the vertical support 310 using a bolt, a rivet, welding, or the like.

In addition, the horizontal portion 322 may be formed in a plate shape, and may extend and protrude further than the support plate 321 in the longitudinal direction (Y-axis direction). Accordingly, in the longitudinal direction (Y-axis direction), a length of the horizontal portion 322 may be longer than the support plate 321. Accordingly, a space S may be formed between the front portion of the battery module 200 disposed on the support plate 321 and the vertical support 310 coupled to the horizontal portion 322, and in the present embodiment, by securing the space S inside the vertical support 310 in this way, insertion and assembly of the battery module 200 is facilitated, and electrical work is facilitated along with installation of electrical devices and wirings (see FIG. 11).

In the lower support 320, the support plate 321, the side portion 321a, and the horizontal portion 322 may be formed integrally.

The lower support 320 may be bent from opposite ends of the support plate 321 to place the side portion 321a, and the horizontal portion 322 may be bent at the side portion 321a to place the horizontal portion 322, thereby reinforcing the rigidity and stably supporting the heavy battery module 200.

The upper support 330 may be disposed at an upper portion of the lower support 320 in the support frame 300 to support the plurality of battery modules 200. In the present embodiment, the upper support 330 may be disposed between the lower support 320 and the top fixing member 340, and may be connected to approximately a center portion of the vertical support 310.

The configuration of the upper support 330 may be similar to that of the lower support 320. Although it is illustrated that there are two battery modules 200 supported on the upper support 330, two or more battery modules 200 may be disposed on the upper support 330.

The upper support 330 may include a support plate 331 and two horizontal portions 332 (see FIG. 16).

In the upper support 330, the support plate 331 may be formed as a plate having an approximately quadrangular shape. The support plate 331 may be integrally formed with a bent plate 331b that is bent upward from an edge in the width direction (X-axis direction) of the support plate 331, and may be fixed by being coupled to the two vertical supports 310 disposed at the rear of the battery module 200 using a bolt or the like through a coupling hole 331c formed in the bent plate 331b. The support plate 331 may be made of, for example, a metal material, and may be coupled to the vertical support 310 by means of bolts, rivets, welding, and the like.

A sheet 333 may be disposed on the support plate 331. The sheet 333 may be coupled or attached with an adhesive to the support plate 321, and may be, for example, a resin sheet, a poly carbonate sheet, or the like.

In the upper support 330, similarly to the lower support 320, the sheet 333 may be disposed on the support plate 331, such that friction may be reduced when the heavy battery module 200 is disposed on the support plate 331, thereby facilitating installation of the battery module 200.

An area of the sheet 333 may be the same as or smaller than an area of the support plate 331, and may be larger than a sum of the areas of the bottom portions 211 of the two battery modules 200.

The side portion 331a may be bent downwards at opposite ends of the support plate 331 along the longitudinal direction (Y-axis direction). In the longitudinal direction (Y-axis direction), a length of the side portion 331a may be the same as that of the support plate 331.

The two horizontal portions 332 may be bent (e.g., at a right angle) from end portions of the side portion 331a toward the support plate 321. The horizontal portion 332 may be parallel to the support plate 331.

In the upper support 330, the horizontal portion 332 may be formed integrally with the support plate 331, and one end of each horizontal portion 332 may be coupled to a center portion of the vertical support 310 disposed in front of the battery module 200 by means of a bolt, rivet, welding, or the like.

In addition, the horizontal portion 332 may be formed in a plate shape, and may extend and protrude further than the support plate 331 in the longitudinal direction (Y-axis direction). Accordingly, in the longitudinal direction (Y-axis direction), a length of the horizontal portion 332 may be longer than that of the support plate 331. Accordingly, a space S may be formed between the front portion of the battery module 200 disposed on the support plate 331 and the vertical support 310 coupled to the horizontal portion 332, such that the space S inside the vertical support 310 may be secured to facilitate insertion and assembly of the battery module 200 and facilitate electrical work.

In the upper support 330, the support plate 331, the side portion 331a, and the horizontal portion 332 may also be formed integrally.

The upper support 330 may be bent at opposite ends of the support plate 331 to place the side portion 331a, and the horizontal portion 332 may be bent at the side portion 331a to place the horizontal portion 332, thereby reinforcing rigidity and stably supporting the heavy battery module 200.

The top fixing member 340 may be disposed at an upper portion of the support frame 300 and may serve to fix and support the upper portion of the support frame 300.

The top fixing member 340 may include two fixing members 341 and two connection portions 342.

In the top fixing member 340, the fixing member 341 may have one end coupled to the vertical support 310 in front of the battery module 200, and the other end of the fixing member 341 may be connected to the vertical support 310 in the rear of the battery module 200. The two fixing members 341 may be disposed parallel to each other. The fixing member 341 may be coupled to the vertical support 310 by a bolt, a rivet, welding, or the like.

The connection portion 342 may have one end connected to one fixing member 341 and the other end connected to another fixing member 341 to connect the two fixing members 341 to each other. The two connection portions 342 may be disposed apart from each other along the longitudinal direction (Y-axis direction) of the fixing member 341 and may be disposed parallel to each other.

In this way, the two fixing members 341 may connect the two vertical supports 310 disposed at the front and rear of the battery module 200 to each other, and the two connection portions 342 may connect the two fixing members 341 to each other, such that the top fixing member 340 may fix and support the top of the support frame 300.

In the present embodiment, the module fixing member 350 may be coupled to the vertical support 310 to fix the two battery modules 200, thereby preventing movement and vibration.

As illustrated, upper and lower module fixing members 350 may be disposed on the two vertical supports 310 at the rear of the battery module 200, and the lower module fixing member 350 may fix the two battery modules 200 disposed on the lower support 320, and the upper module fixing member 350 may fix the two battery modules 200 disposed on the upper support 330.

The module fixing member 350 may include a coupling plate 351 coupled and fixed to the two vertical supports 310, and a rear side of the two battery modules 200 may be supported by the coupling plate 351.

In the present embodiment, since the support frame 300 has the configuration described above, the rigidity of the structure may be stably secured. In addition, the energy storage device 1000 according to the present embodiment may have a reduced installation area and a thinner thickness (a distance in the X-axis direction).

The present disclosure has been described with reference to embodiments as described above, but the present disclosure is not limited to the above embodiments, and various changes and modifications may be made by those skilled in the art within the scope that does not depart from the spirit of the present disclosure.

### [INDUSTRIAL APPLICABILITY]

The present disclosure may provide a lock device for a door, configured to stably lock and unlock the door in an energy storage device.

## Claims

1. A door lock device of an energy storage device for a door coupled to a main body of a case of the energy storage device, the door lock device comprising:
a bracket disposed on the door; and
a rod bar assembly movably disposed on the main body of the case,
wherein the rod bar assembly comprises:
a rod bar slidably disposed on the main body of the case; and
a lock bracket disposed on the rod bar and configured to move together with the rod bar to restrain and release the bracket disposed on the door.

2. The door lock device of the energy storage device of claim 1, wherein the bracket comprises a lock plate, and
an end portion of the lock bracket is disposed on the lock plate in a locked state of the door.

3. The door lock device of the energy storage device of claim 2, wherein the lock bracket comprises a roller.

4. The door lock device of the energy storage device of claim 3, wherein the bracket further comprises an inclined plate inclined at one end of the lock plate.

5. The door lock device of the energy storage device of claim 4, wherein, when the door is switched from an unlocked state to the locked state, the roller of the lock bracket moves along the inclined plate to be disposed on the lock plate.

6. The door lock device of the energy storage device of claim 4, wherein the inclined plate is bent at the one end of the lock plate toward the main body of the case.

7. The door lock device of the energy storage device of claim 4, wherein the lock plate is disposed parallel to the door.

8. The door lock device of the energy storage device of claim 1, further comprising a protrusion disposed on one surface of the main body of the case.

9. The door lock device of the energy storage device of claim 8, wherein the rod bar assembly further comprises a fixing member disposed on the rod bar and movable together with the rod bar, and a position of the fixing member is fixed by the protrusion in an unlocked state of the door.

10. The door lock device of the energy storage device of claim 9, wherein the fixing member comprises a convex curved portion.

11. The door lock device of the energy storage device of claim 10, wherein the fixing member is formed in a strap shape, and
the convex curved portion is formed in a portion of the fixing member.

12. The door lock device of the energy storage device of claim 10, wherein the convex curved portion is convexly curved in a direction of the protrusion.

13. The door lock device of the energy storage device of claim 12, wherein the convex curved portion of the fixing member is seated on the protrusion in the unlocked state of the door.

14. The door lock device of the energy storage device of claim 8, wherein the rod bar includes a hole extending along a movement direction thereof.

15. The door lock device of the energy storage device of claim 14, wherein the protrusion is inserted into the hole.

16. The door lock device of the energy storage device of claim 1, wherein the rod bar assembly further comprises a coupling block in contact with one surface of the main body of the case, and
the rod bar is spaced apart from the one surface of the main body of the case by the coupling block.

17. A door lock device of an energy storage device for a door coupled to a main body of a case of the energy storage device, the door lock device comprising:
a bracket disposed on the door; and
a lock bracket movably disposed on the main body of the case,
wherein the bracket of the door is restrained or released based on a moving direction of the lock bracket.

18. The door lock device of the energy storage device of claim 17, wherein the lock bracket comprises a roller.

19. The door lock device of the energy storage device of claim 17, further comprising:
a protrusion disposed on one surface of the main body of the case; and
a fixing member movable together with the lock bracket,
wherein a position of the fixing member is fixed by the protrusion in an unlocked state of the door.

20. The door lock device of the energy storage device of claim 19, wherein the fixing member comprises a convex curved portion.
